# EUROPÄISCHE PATENTSCHRIFT

(11) **EP 2 018 492 B1**
(45) Veröffentlichungstag und Bekanntmachung des Hinweises auf die Patenterteilung: **07.04.2010**
(21) Anmeldenummer: 07728128.5
(22) Anmeldetag: 16.04.2007
(51) Int. Cl.: F16H 48/08, F16H 48/22, F16H 48/24, F16H 48/30, B60K 17/16, B60K 17/346, B60K 23/04, B60K 23/08

(54) **GETRIEBEVORRICHTUNG ZUM VERTEILEN EINES ANTRIEBSMOMENTES AUF WENIGSTENS ZWEI ABTRIEBSWELLEN**
TRANSMISSION DEVICE FOR DISTRIBUTING A DRIVE TORQUE TO AT LEAST TWO OUTPUT SHAFTS
SYSTEME DE TRANSMISSION POUR REPARTIR UN COUPLE MOTEUR SUR AU MOINS DEUX ARBRES DE SORTIE

(30) Priorität: 12.05.2006 DE 102006022173
(43) Veröffentlichungstag der Anmeldung: 28.01.2009
(73) Patentinhaber: ZF Friedrichshafen AG, 88038 Friedrichshafen (DE)
(72) Erfinder: BÖCK, Alois, 94116 Hutthurm (DE); BAASCH, Detlef, 88048 Ailingen (DE); GUMPOLTSBERGER, Gerhard, 88045 Friedrichshafen (DE); ROSEMEIER, Thomas, 88074 Meckenbeuren (DE)
(86) Internationale Anmeldenummer: PCT/EP2007/053663
(87) Internationale Veröffentlichungsnummer: WO 2007/131847

(56) Entgegenhaltungen:
- EP-A- 1 621 800
- JP-A- 11 165 559
- US-A- 6 056 660
- US-A1- 2005 261 099

## Beschreibung

Die vorliegende Erfindung betrifft eine Getriebevorrichtung zum Verteilen eines Antriebsmomentes auf wenigstens zwei Abtriebswellen, gemäß dem Oberbegriff des Patentanspruchs 1.

Derartige Getriebevorrichtungen bzw. Überlagerungsgetriebe werden zum Verschieben von Momenten zwischen den Rädern einer Achse in Kraftfahrzeugen eingesetzt. Hierbei sind neben dem eigentlichen Differential entsprechende Vorrichtungen bzw. Überlagerungseinheiten vorgesehen, wobei für jede Übertragungsrichtung eine Lamellenkupplung vorgesehen ist.

Aus der DE 103 48 959 A1 der Anmelderin ist eine Getriebevorrichtung zum Verteilen eines Antriebsmomentes auf wenigstens zwei Abtriebswellen mit mindestens zwei wenigstens dreiwelligen Planetensätzen bekannt, wobei die Planetensätze als Differential dienen. Dabei ist jeweils eine Welle eines Planetensatzes mit einer Antriebswelle verbunden und jeweils eine zweite Welle eines Plantetensatzes mit einer der Abtriebswellen. Darüber hinaus steht jeweils eine dritte Welle der Planetensätze derart mit einer Bremse in Wirkverbindung, dass ein Verteilungsgrad des Antriebsmomentes zwischen den beiden Abtriebswellen in Abhängigkeit der Übertragungsfähigkeiten der Bremsen variiert. Die DE 103 48 959 beschreibt zusätzlich ein Verfahren zum Steuern und Regeln der bekannten Getriebevorrichtung, bei dem zur Verteilung eines Antriebsmomentes einer Antriebsmaschine zwischen den beiden Abtriebswellen der Getriebevorrichtung die Übertragungsfähigkeiten der beiden Bremsen derart eingestellt werden, dass eine Bremse einen synchronen Zustand aufweist und die Übertragungsfähigkeit der anderen Bremse zwischen einem unteren Grenzwert und einem oberen Grenzwert, der einem geschlossenen Zustand der Bremsen entspricht, variiert wird.

Die DE 103 48 960 A1 der Anmelderin beschreibt ebenfalls eine Getriebevorrichtung zum Verteilen eines Antriebsmomentes auf wenigstens zwei Abtriebswellen mit mindestens zwei wenigstens dreiwelligen Planetensätzen, wobei die Planetensätze als Differential dienen, und wobei jeweils eine Welle eines Planetensatzes mit einer Antriebswelle verbunden ist. Des weiteren stellt jeweils eine Welle eines Planetensatzes eine der Abtriebswellen dar, wobei jeweils wenigstens eine weitere Welle eines Planetensatzes mit einer Welle eines weiteren Planetensatzes wirkverbunden ist. Hierbei ist ein betriebszustandsabhängiges Moment einer Welle in Abhängigkeit eines Betriebszustandes der jeweils anderen damit wirkverbundenen Welle über die Wirkverbindung derart abstützbar, dass bei Auftreten eines Drehzahlunterschieds zwischen den Abtriebswellen über die Wirkverbindung ein den Drehzahlunterschied veränderndes Moment an den Planetensätzen anliegt.

Die deutsche Offenlegungsschrift 2 017 716 beschreibt ein Lenkgetriebe für Raupenfahrzeuge, insbesondere für Pistenraupen, bestehend aus einem Antriebsritzel, einem damit in Eingriff stehenden, mit einem inneren Getriebegehäuse fest verbundenen Tellerrad, sowie im Gehäuse drehbar gelagerten Ausgleichsrädern und mindestens zwei Abtriebswellen. Dabei ist diesem bekannten Differentialgetriebe ein zweites Differentialgetriebe überlagert, wobei die eine oder die andere Seite des überlagerten Differentials ganz oder teilweise abbremsbar ist.

Des weiteren ist aus der gattungsgemäßen DE 697 10 033 T2 (ebenfalls veröffentlicht unter US-A-6 056 660) ein Differentialgetriebe bekannt, umfassend ein drehbares Bauteil auf der Eingangsseite zur Aufnahme einer externen Antriebskraft, zwei drehbare Bauteile auf der Ausgangsseite, die koaxial zu der Drehachse des eingangsseitigen drehbaren Bauteils angeordnet sind, ein Getriebegehäuse, in dem das eingangsseitige Bauteil und die ausgangsseitigen Bauteile frei drehbar gelagert sind, wobei eine Drehkraft des eingangsseitigen drehbaren Bauteils auf die ausgangsseitigen drehbaren Bauteile übertragen wird, während eine unterschiedliche Drehzahl zwischen den ausgangsseitigen drehbaren Bauteilen zugelassen wird.

Dieses Differentialgetriebe umfasst zudem ein erstes eingangsseitiges Zahnrad, das auf dem eingangsseitigen drehbaren Bauteil an dessen einem axialen Ende angebracht ist, welches zusammen mit dem eingangsseitigen drehbaren Bauteil drehbar ist, ein zweites eingangsseitiges Zahnrad, das an dem eingangsseitigen drehbaren Bauteil angebracht ist und zusammen mit diesem drehbar ist, ein erstes ausgangsseitiges Zahnrad mit einem Verzögerungsverhältnis, das größer oder kleiner in Bezug auf das erste eingangsseitige Zahnrad ist, wobei das erste ausgangsseitige Zahnrad zusammen mit den ausgangsseitigen drehbaren Bauteilen drehbar ist, ein zweites ausgangsseitiges Zahnrad mit einem Verzögerungsverhältnis, das kleiner oder größer in Bezug auf das zweite eingangsseitige Zahnrad ist, wenigstens ein Planetenrad, das mit dem ersten eingangsseitigen Zahnrad und dem ersten ausgangsseitigen Zahnrad kämmt, und wenigstens ein zweites Planetenrad, das mit dem zweiten eingangsseitigen Zahnrad und dem zweiten ausgangsseitigen Zahnrad kämmt.

Bei dem Getriebe gemäß der DE 697 10 033 T2 ist das zweite eingangsseitige Zahnrad an dem eingangsseitigen drehbaren Bauteil an einem axialen Ende angeordnet, wobei das zweite ausgangsseitige Zahnrad koaxial drehbar mit einem der ausgangsseitigen drehbaren Bauteile ist. Des weiteren weist das Differentialgetriebe einen Träger auf, der das erste Planetenrad und das zweite Planetenrad so abstützt, dass sich diese um ihre eigenen Achsen drehen können und um die Drehachse des eingangsseitigen drehbaren Bauteils umlaufen.

Ferner ist eine erste Drehsteuerung zur Steuerung der Drehung des Trägers um die Drehachse des eingangsseitigen drehbaren Bauteils mit beliebiger Steuerkraft und eine zweite Drehsteuerung zur Steuerung der Drehung des zweiten ausgangsseitigen Zahnrades mit beliebiger Steuerkraft vorgesehen, wobei die Drehsteuerungen eine Anzahl von Reibplatten umfassen, die zusammen mit dem Träger oder dem zweiten ausgangsseitigen Zahnrad drehbar sind, sowie eine Anzahl von Reibplatten, die gemeinsam mit dem Gehäuse drehbar sind; ferner sind Druckmittel zum Zusammendrücken der Reibplatten mit beliebiger Druckkraft vorgesehen. Dieses bekannte Getriebe umfasst in nachteiliger Weise eine große Anzahl an Bauteilen; zudem sind die Herstellungs- und Montagekosten hoch.

Aus der JP 11 165559 A ist eine Vorrichtung zum Verteilen eines Antriebsmomentes auf wenigstens zwei Abtriebswellen bekannt, umfassend ein Differential, wobei zwischen dem Differentialkorb des Differentials und dem Abtrieb einer Seite ein zweifacher Planetensatz koaxial zum Abtrieb vorgesehen ist, der ein erstes Sonnenrad, ein zweites Sonnenrad, eine erste Planetengruppe, eine Zwischenplanetengruppe und ein Hohlrad umfasst, wobei das Hohlrad mit dem Differentialkorb und der Steg des Planetensatzes mit dem Abtrieb verbunden ist. Hierbei kämmt das erste Sonnenrad mit der ersten Planetengruppe und ist zur Verschiebung des Momentes in eine Richtung über eine Bremse an ein Gehäuse der Getriebevorrichtung abbremsbar bzw. ankoppelbar. Ferner ist vorgesehen, dass das zweite Sonnenrad des Planetensatzes mit der Zwischenplanetengruppe kämmt und dass das zweite Sonnenrad zur Verschiebung des Momentes in die entgegengesetzte Richtung über eine weitere Bremse an ein Gehäuse der Getriebevorrichtung abbremsbar bzw. ankoppelbar ist.

Der vorliegenden Erfindung liegt die Aufgabe zugrunde, eine Getriebevorrichtung zum Verteilen eines Antriebsmomentes auf wenigstens zwei Abtriebswellen, umfassend ein Differential anzugeben, welche einfach aufgebaut ist. Insbesondere soll die Überlagerungseinheit in ein Differential integriert werden, wobei die Betätigung der Überlagerungseinheit auf einer Seite des Differentials ermöglicht werden soll sowie eine Getriebevorrichtung weiterzuentwickeln, bei der die Montagekosten für die Planetensätze verringert werden.

Diese Aufgabe wird durch die Merkmale des Patentanspruches 1 gelöst. Weitere erfindungsgemäße Ausgestaltungen und Vorteile gehen aus den entsprechenden Unteransprüchen hervor.

Demnach wird eine Getriebevorrichtung zum Verteilen eines Antriebsmomentes auf wenigstens zwei Abtriebswellen vorgeschlagen, umfassend ein Differential, welches ständig mit den Abtriebswellen verbunden ist, wobei zwischen dem Differentialkorb und dem Abtrieb einer Seite in Kraftflussrichtung betrachtet ein erster Plus-Planetensatz und ein zweiter Plus - Planetensatz koaxial zum Abtrieb nacheinander angeordnet sind, wobei der erste Planetensatz ein erstes Sonnenrad, ein zweites Sonnenrad, eine erste Planetengruppe und eine zweite Planetengruppe und der zweite Planetensatz ein erstes Sonnenrad, ein zweites Sonnenrad, eine erste Planetengruppe und eine zweite Planetengruppe umfasst, wobei das erste Sonnenrad des ersten Planetensatzes mit dem Differentialkorb verbunden ist und das zweite Sonnenrad des ersten Planetensatzes mit dem ersten Sonnenrad des zweiten Planetensatzes verbunden ist.

Des weiteren ist das zweite Sonnenrad des zweiten Planetensatzes mit dem Abtrieb verbunden, wobei der Steg des zweiten Planetensatzes zur Betätigung der Getriebevorrichtung bzw. zur Übertragung eines regelbaren Drehmomentes über eine Bremse an ein Gehäuse der Getriebevorrichtung geregelt abbremsbar bzw. ankoppelbar ist, und wobei der Steg des ersten Planetensatzes zur Realisierung einer Übersetzungsumkehr vorzugsweise über eine Klauenkupplung an ein Gehäuse der Getriebevorrichtung ankoppelbar ist.

Durch die erfindungsgemäße Konzeption wird mit einer geringen Anzahl an Bauteilen eine sehr kompakte Bauweise erzielt, welche es ermöglicht, die Betätigungseinrichtungen der Getriebevorrichtung an einer Seite des Differentials anzuordnen.

Die Erfindung wird im Folgenden anhand der beigefügten Figuren beispielhaft näher erläutert. Es zeigen:
- Figur 1: eine schematische Ansicht einer Anordnung nach dem Stand der Technik, bei der zwischen dem Differentialkorb des Diffe- rentials und dem Abtrieb einer Seite ein zweifacher Plane- tensatz koaxial zum Abtrieb vorgesehen ist; und
- Figur 2: eine schematische Ansicht einer ersten Ausführungsform der Erfindung, bei der zwischen dem Differentialkorb des Diffe- rentials und dem Abtrieb einer Seite in Kraftflussrichtung be- trachtet zwei Plus-Planetensätze koaxial zum Abtrieb nach- einander angeordnet sind.

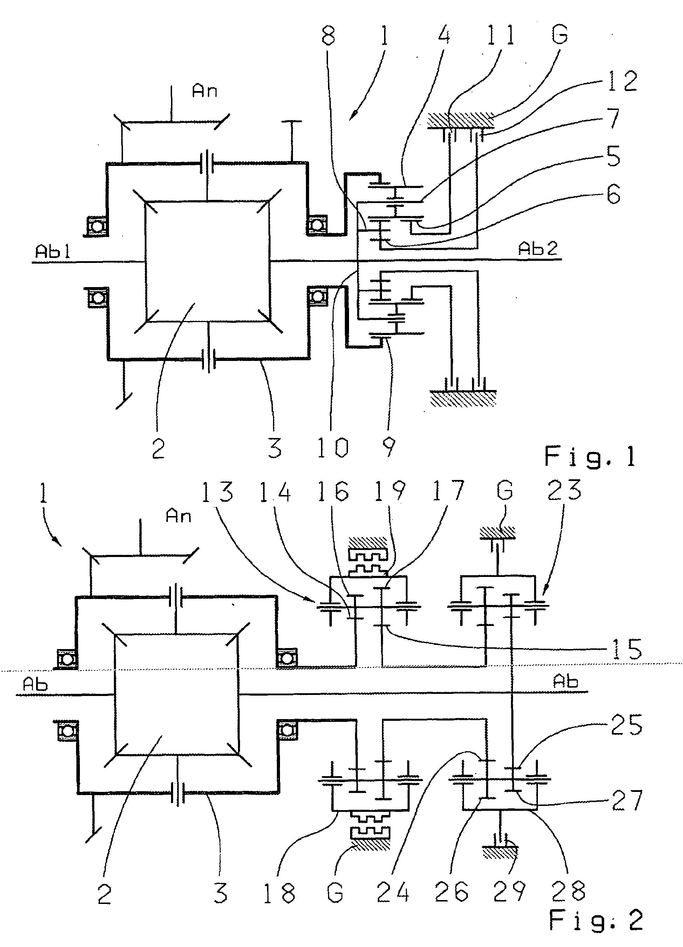

Bezugnehmend auf Figur 1 umfasst die Getriebevorrichtung 1 ein Differential 2 mit einem vom Antrieb An angetriebenen Differentialkorb 3, wobei die Abtriebe Ab1 und Ab2 mit dem Differential 2 verbunden sind.

sind. Wie der Figur zu entnehmen ist, ist zwischen dem Differentialkorb 3 und dem Abtrieb Ab2 einer Seite ein zweifacher Planetensatz 4 koaxial zum Abtrieb Ab2 vorgesehen, welcher ein erstes Sonnenrad 5 und ein zweites Sonnenrad 6, eine erste Planetengruppe 7, eine Zwischenplanetengruppe 8 und ein Hohlrad 9 umfasst. Die Zwischenplanetengruppe 8 ist radial betrachtet zwischen dem zweiten Sonnenrad 6 und der ersten Planetengruppe 7 angeordnet.

Das Hohlrad 9 ist mit dem Differentialkorb 3 verbunden, wobei der Steg 10 des Planetensatzes 4 mit dem Abtrieb Ab2 verbunden ist. Des weiteren kämmt das erste Sonnenrad 5 mit der ersten Planetengruppe 7 und ist zur Verschiebung in eine Richtung (bei der gezeigten Anordnung ins Langsame) über eine Bremse 11 an das Gehäuse G ankoppelbar. Des weiteren kämmt das zweite Sonnenrad 6 mit der Zwischenplanetengruppe 8 und ist zur Verschiebung in die entgegengesetzte Richtung (bei der gezeigten Anordnung ins Schnelle) über eine weitere Bremse 12 an das Gehäuse G ankoppelbar.

Bei der in Figur 2 gezeigten erfindungsgemäßen Ausführungsform sind zwischen dem Differentialkorb 3 und dem Abtrieb Ab2 einer Seite in Kraftflussrichtung betrachtet zwei Plus-Planetensätze 13, 23 koaxial zum Abtrieb Ab2 nacheinander angeordnet. Der Planetensatz 13 umfasst ein erstes Sonnenrad 14, ein zweites Sonnenrad 15, eine erste Planetengruppe 16 und eine zweite Planetengruppe 17; der Planetensatz 23 umfasst ein erstes Sonnenrad 24, ein zweites Sonnenrad 25, eine erste Planetengruppe 26 und eine zweite Planetengruppe 27.

Hierbei ist das erste Sonnenrad 14 des Planetensatzes 13 mit dem Differentialkorb 3 verbunden und wird von diesem angetrieben, wobei das zweite Sonnenrad 15 des Planetensatzes 13 mit dem ersten Sonnenrad 24 des Planetensatzes 23 verbunden ist. Ferner ist das zweite Sonnenrad 25 des Planetensatzes 23 mit dem Abtrieb Ab2 verbunden. Gemäß der Erfindung ist der Steg 28 des Planetensatzes 23 zur Betätigung der Getriebevorrichtung über eine Bremse 29 an das Gehäuse G geregelt abbremsbar bzw. ankoppelbar. Des weiteren ist der Steg 18 des Planetensatzes 13 zur Realisierung einer Übersetzungsumkehr vorzugsweise über eine Klauenkupplung 19 an das Gehäuse G ankoppelbar.

Im Rahmen einer bevorzugten Ausführungsform der Erfindung ist die Standübersetzung i_2 des Planetensatzes 13 gleich dem Quadrat der Standübersetzung i_1 des Planetensatzes 23.

Selbstverständlich fällt auch jede konstruktive Ausbildung, insbesondere jede räumliche Anordnung der Bauteile der erfindungsgemäßen Getriebevorrichtung an sich sowie zueinander und soweit technisch sinnvoll, unter den Schutzumfang der vorliegenden Ansprüche, ohne die Funktion der Getriebevorrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Getriebevorrichtung
- 2: Differential
- 3: Differentialkorb
- 4: zweifacher Planetensatz
- 5: erstes Sonnenrad des Planetensatzes 4
- 6: zweites Sonnenrad des Planetensatzes 4
- 7: erste Planetengruppe des Planetensatzes 4
- 8: Zwischenplanetengruppe des Planetensatzes 4
- 9: Hohlrad des Planetensatzes 4
- 10: Steg
- 11: Bremse
- 12: Bremse
- 13: Planetensatz
- 14: erstes Sonnenrad des Planetensatzes 13
- 15: zweites Sonnenrad des Planetensatzes 13
- 16: erste Planetengruppe des Planetensatzes 13
- 17: zweite Planetengruppe des Planetensatzes 13
- 18: Steg des Planetensatzes 13
- 19: Klauenkupplung
- 23: Planetensatz
- 24: erstes Sonnenrad des Planetensatzes 23
- 25: zweites Sonnenrad des Planetensatzes 23
- 26: erste Planetengruppe des Planetensatzes 23
- 20: zweite Planetengruppe des Planetensatzes 23
- 27: zweite Planetengruppe des Planetensatzes 23
- 28: Steg des Planetensatzes 23
- 29: Bremse
- G: Gehäuse
- An: Antrieb
- Ab1: Abtrieb
- Ab2: Abtrieb

## Patentansprüche

1. Getriebevorrichtung zum Verteilen eines Antriebsmomentes auf wenigstens zwei Abtriebswellen (Ab1, Ab2), umfassend ein Differential (2), welches ständig mit den Abtriebswellen (Ab1, Ab2) verbunden ist, wobei zwischen dem Differentialkorb (3) des Differentials (2) und dem Abtrieb (Ab2) einer Seite in Kraftflussrichtung betrachtet ein erster Plus-Planetensatz (13) und ein zweiter Plus - Planetensatz (23) koaxial zum Abtrieb (Ab2) nacheinander angeordnet sind, wobei der erste Planetensatz (13) ein erstes Sonnenrad (14), ein zweites Sonnenrad (15), eine erste Planetengruppe (16) und eine zweite Planetengruppe (17), und der zweite Planetensatz (23) ein erstes Sonnenrad (24), ein zweites Sonnenrad (25), eine erste Planetengruppe (26) und eine zweite Planetengruppe (27) umfasst, wobei das erste Sonnenrad (14) des ersten Planetensatzes (13) mit dem Differentialkorb (3) verbunden ist und das zweite Sonnenrad (25) des zweiten Planetensatzes (23) mit dem Abtrieb (Ab2) verbunden ist, **dadurch gekennzeichnet, dass** das zweite Sonnenrad (15) des ersten Planetensatzes (13) mit dem ersten Sonnenrad (24) des zweiten Planetensatzes (23) verbunden ist, dass der Steg (28) des zweiten Planetensatzes (23) zur Betätigung der Getriebevorrichtung (1) über eine Bremse (29) an das Gehäuse (G) geregelt abbremsbar bzw. ankoppelbar ist und dass der Steg (18) des ersten Planetensatzes (13) zur Realisierung einer Übersetzungsumkehr an das Gehäuse (G) ankoppelbar ist.

2. Getriebevorrichtung zum Verteilen eines Antriebsmomentes auf wenigstens zwei Abtriebswellen (Ab1, Ab2) nach Anspruch 1, **dadurch gekennzeichnet, dass** der Steg (18) des ersten Planetensatzes (13) zur Realisierung einer Übersetzungsumkehr über eine Klauenkupplung (19) an das Gehäuse (G) ankoppelbar ist.

3. Getriebevorrichtung zum Verteilen eines Antriebsmomentes auf wenigstens zwei Abtriebswellen (Ab1, Ab2) nach Anspruch 1, **dadurch gekennzeichnet, dass** die Standübersetzung i_2 des ersten Planetensatzes (13) gleich dem Quadrat der Standübersetzung i_1 des zweiten Planetensatzes (23) ist.

## Claims

1. Transmission device for distributing a drive torque to at least two output shafts (Ab1, Ab2), comprising a differential (2) which is permanently connected to the output shafts (Ab1, Ab2), with a first plus planetary gear set (13) and a second plus planetary gear set (23) being arranged in series, coaxially with respect to the output (Ab2), between the differential cage (3) of the differential (2) and the output (Ab2) of one side as viewed in the power flow direction, with the first planetary gear set (13) comprising a first sun gear (14), a second sun gear (15), a first planet group (16) and a second planet group (17) and with the second planetary gear set (23) comprising a first sun gear (24), a second sun gear (25), a first planet group (26) and a second planet group (27), with the first sun gear (14) of the first planetary gear set (13) being connected to the differential cage (3) and with the second sun gear (25) of the second planetary gear set (23) being connected to the output (Ab2), **characterized in that** the second sun gear (15) of the first planetary gear set (13) is connected to the first sun gear (24) of the second planetary gear set (23), **in that**, to actuate the transmission device (1), the web (28) of the second planetary gear set (23) can be braked with respect to or coupled to the housing (G) in a regulated fashion by means of a brake (29), and **in that** the web (18) of the first planetary gear set (13) can be coupled to the housing (G) in order to realize a transmission ratio reversal.

2. Transmission device for distributing a drive torque to at least two output shafts (Ab1, Ab2) according to Claim 1, **characterized in that** the web (18) of the first planetary gear set (13) can be coupled to the housing (G) by means of a claw clutch (19) in order to realize a transmission ratio reversal.

3. Transmission device for distributing a drive torque to at least two output shafts (Ab1, Ab2) according to Claim 1, **characterized in that** the static transmission ratio i_2 of the first planetary gear set (13) is equal to the square of the static transmission ratio i_1 of the second planetary gear set (23).

## Revendications

1. Système de transmission pour répartir un couple d'entraînement sur au moins deux arbres de sortie (Ab1, Ab2), comprenant un différentiel (2), qui est connecté de manière constante aux arbres de sortie (Ab1, Ab2), dans lequel, entre la coquille de différentiel (3) du différentiel (2) et la sortie (Ab2) d'un côté, vu dans le sens du flux de force, un premier train planétaire positif (13) et un deuxième train planétaire positif (23) sont disposés l'un après l'autre coaxialement par rapport à la sortie (Ab2), le premier train planétaire (13) comprenant une première roue solaire (14), une deuxième roue solaire (15), un premier groupe planétaire (16) et un deuxième groupe planétaire (17), et le deuxième train planétaire (23) comprenant une première roue solaire (24), une deuxième roue solaire (25), un premier groupe planétaire (26) et un deuxième groupe planétaire (27), la première roue solaire (14) du premier train planétaire (13) étant connectée à la coquille de différentiel (3) et la deuxième roue solaire (25) du deuxième train planétaire (23) étant connectée à la sortie (Ab2), **caractérisé en ce que** la deuxième roue solaire (15) du premier train planétaire (13) est connectée à la première roue solaire (24) du deuxième train planétaire (23), **en ce que** le porte-satellites (28) du deuxième train planétaire (23), pour l'actionnement du système de transmission (1), peut être freiné de manière régulée ou accouplé par le biais d'un frein (29) au boîtier (G), et **en ce que** le porte-satellites (18) du premier train planétaire (13) peut être accouplé au boîtier (G) pour réaliser une inversion de transmission.

2. Système de transmission pour répartir un couple d'entraînement sur au moins deux arbres de sortie (Ab1, Ab2) selon la revendication 1, **caractérisé en ce que** le porte-satellites (18) du premier train planétaire (13) peut être accouplé au boîtier (G) par le biais d'un accouplement à griffes (19) pour réaliser une inversion de transmission.

3. Système de transmission pour répartir un couple d'entraînement sur au moins deux arbres de sortie (Ab1, Ab2) selon la revendication 1, **caractérisé en ce que** le rapport de transmission i_2 du premier train planétaire (13) est égal au carré du rapport de transmission i_1 du deuxième train planétaire (23).
